# FASCICULE DE BREVET EUROPEEN

(11) **EP 2 795 038 B1**
(45) Date de publication et mention de la délivrance du brevet: **31.07.2019**
(21) Numéro de dépôt: 12821264.4
(22) Date de dépôt: 14.12.2012
(51) Int. Cl.: E21B 17/042, F16L 15/00

(54) **COMPOSANT TUBULAIRE POUR LE FORAGE ET L'EXPLOITATION DES PUITS D'HYDROCARBURES ET JOINT FILETE RESULTANT**
ROHRKOMPONENTE ZUM BOHREN UND ZUM BETRIEB VON ÖLQUELLEN UND RESULTIERENDE GEWINDEVERBINDUNG
TUBULAR COMPONENT FOR DRILLING AND OPERATING OIL WELLS AND RESULTING THREAD JOINT

(30) Priorité: 19.12.2011 FR 1103930
(43) Date de publication de la demande: 29.10.2014
(73) Titulaire: Tuboscope Vetco (France) SAS, 59145 Berlaimont (FR)
(72) Inventeur: GRANGER, Scott, Houston, TX-77041 (US); CARON, Olivier, F-92800 Puteaux (FR); VERGER, Eric, F-59144 Gommegnies (FR); ROUSSIE, Gabriel, F-59300 Valenciennes (FR); FRANCHI, Jonathan, Houston, TX-77040 (US)
(74) Mandataire: Rankin, Douglas
(86) Numéro de dépôt international: PCT/FR2012/000520
(87) Numéro de publication internationale: WO 2013/093233

(56) Documents cités:
- FR-A1- 2 937 077
- JP-A- 59 083 887
- US-A1- 2009 084 541

## Description

La présente invention a pour objet un composant utilisé pour le forage et l'exploitation des puits d'hydrocarbures, et plus précisément l'extrémité d'un tel composant, ladite extrémité étant de type mâle ou femelle et apte à être raccordée à une extrémité correspondante d'un autre composant utilisé également pour le forage et l'exploitation des puits d'hydrocarbures.

On entend par composant « utilisé pour le forage et l'exploitation des puits d'hydrocarbures », tout élément de forme sensiblement tubulaire destiné à être assemblé à un autre élément du même type ou non pour constituer in fine soit une garniture apte à forer un puits d'hydrocarbures, soit une colonne montante sous-marine pour la maintenance telle que les « work over riser » ou pour l'exploitation telle que les risers, soit une colonne de cuvelage ou de production intervenant dans l'exploitation du puits. L'invention s'applique notamment aux composants utilisés dans une garniture de forage tels que par exemple les tiges de forage « Drill Pipes », les tiges lourdes « Heavy Weight Drill Pipes », les masses-tiges « Drill Collars » et les parties de connexion des tiges et des tiges lourdes dites les « tool joints ».

De manière connue, chaque composant utilisé dans une garniture de forage comporte généralement une extrémité dotée d'une zone filetée mâle et une extrémité dotée d'une zone filetée femelle destinées chacune à être assemblée par vissage avec l'extrémité correspondante d'un autre composant, l'assemblage définissant une connexion. La garniture ainsi constituée est mise en rotation lors du forage à la surface du puits; de ce fait les composants doivent être vissés entre eux avec un couple important pour pouvoir transmettre un couple de rotation suffisant pour permettre le forage dans le puits sans qu'il y ait de dévissage ou bien de sur-vissage. Le couple de vissage est généralement atteint grâce à la coopération en serrage de surfaces de butée ménagées sur chacun des composants destinés à être vissés.

Toutefois, dans certaines conditions de forage ou d'utilisation de connexions, du gaz peut se retrouver sous pression. L'étanchéité jusqu'ici garantie par des surfaces de butées n'est alors plus assurée. Aussi, il est nécessaire de garantir un niveau d'étanchéité renforcée et correspondant à des pressions élevées, au niveau de la connexion entre deux composants. Pour ce faire, il est connu, sur d'autres types de connexions telles que les connexions VAM® TOP décrite dans le catalogue n°940 de la demanderesse, de ménager sur l'extrémité mâle de la connexion, au-delà de la zone filetée, une surface d'étanchéité destinée à coopérer en serrage radial avec une surface d'étanchéité ménagée sur l'extrémité femelle de la connexion. Plus précisément, la coopération en serrage entre les deux surfaces s'effectue par le montage en force de la surface d'étanchéité de l'extrémité mâle sous la surface d'étanchéité de l'extrémité femelle, et ce, lors de l'assemblage de la connexion par vissage. Afin de faciliter le montage en force, il est connu par exemple d'employer des surfaces d'étanchéité de forme par exemple tronconique sur chacune des extrémités mâle et femelles.

Toutefois, compte tenu de l'évolution des cahiers des charges actuels qui tendent à exiger des étanchéités compatibles avec de très forte pressions, il est nécessaire d'imposer des pressions de contact élevées au niveau des surfaces d'étanchéité, ces pressions de contact étant réalisé par une interférence entre l'élément male et l'élément femelle. On entend par interférence, la différence entre la valeur du diamètre moyen de la portion portant la surface d'étanchéité de l'extrémité mâle avant le montage en force, et la valeur du diamètre moyen de la portion portant la surface d'étanchéité de l'extrémité mâle une fois qu'elle est enserrée dans l'extrémité femelle.

Compte tenu des épaisseurs des composants utilisés dans une garniture de forage qui sont de l'ordre de 4,8 à 101,6 mm (soit 0,19 à 4 pouces) selon les spécifications dimensionnelles exigées par la norme API 7, qui est la norme définie pour les composants de forage par l'American Petroleum Institute, se pose alors le problème du grippage lors du montage en force, ledit grippage étant fonction de la valeur de la pression de contact et donc de l'interférence et de l'épaisseur du composant. Le même problème se pose pour des connections pour les Work Overiser high Pressure ou pour les tubes épais de cuvelage ou de production.

Afin de diminuer les risques de grippage, plusieurs solutions ont été envisagées. Une première voie d'amélioration, consistant à réduire l'interférence, a été mise à l'étude. Il est alors apparu qu'elle est incompatible avec les tolérances d'usinage admissibles. En effet, il faudrait limiter les écarts maximum admissibles et les défauts de concentricités du diamètre moyen de la portion portant la surface d'étanchéité mâle tout en préservant l'étanchéité.

Une seconde voie d'amélioration a consisté à diminuer l'interférence tout en étendant la surface d'étanchéité. Toutefois, il apparaît lors des essais, qu'allonger la longueur de contact entre les deux surfaces d'étanchéité augmente l'instabilité dudit contact, et donc peut induire une perte d'étanchéité dans certaines conditions de service.

Une troisième voie d'amélioration a consisté à diminuer principalement la raideur radiale de la portion portant la surface d'étanchéité mâle. Ceci est obtenu en ménageant au niveau des surfaces de butées internes une rainure dans l'épaisseur de la portion terminale de l'extrémité mâle ainsi que dans l'épaisseur de l'épaulement de l'extrémité femelle.

Cette solution présente aussi l'avantage de garantir une pression de contact améliorée au niveau des surfaces de butées internes, du fait de la diminution de la raideur axiale. Ainsi, lorsque le composant tubulaire travaille en traction, les surfaces de butées restent en contact du fait du retour élastique de la portion terminale de l'extrémité mâle vissée initialement fortement contre l'épaulement. De ce fait, il est possible de garantir l'étanchéité au niveau des surfaces de butée et de s'affranchir ainsi des surfaces d'étanchéité ménagées respectivement sur la surface circonférentielle extérieure et intérieure des extrémités mâle et femelle.

Toutefois, l'art antérieur tel que proposé dans le brevet FR2937077 propose une répartition des pressions de contact au niveau des surfaces de butées qui diminue lorsque l'on se rapproche des rainures pratiquées dans la portion terminale de l'extrémité mâle ainsi que dans l'épaisseur de l'épaulement de l'extrémité femelle. De plus, les pressions de contact sont inférieures au niveau de la zone définie entre la rainure et l'intérieur des composants tubulaires en comparaison aux pressions de contact qui s'exercent dans la zone définie entre la rainure et l'extérieur aux composants tubulaires. Ces déséquilibres de pressions de contact ont pour inconvénient de fragiliser le contact entre les surfaces de butée ce qui peut occasionner des défauts d'étanchéité ou bien le dévissage des composants.

C'est pourquoi l'invention a pour objet de redéfinir les surfaces de butée de manière à renforcer les pressions de contact dans la zone de butée intérieure à la rainure. De cette manière, on obtient une étanchéité axiale obtenue en optimisant le contact au niveau des zones de butée.

Plus précisément, l'invention a pour objet un ensemble pour la réalisation d'un joint fileté pour le forage ou l'exploitation des puits d'hydrocarbures, selon la revendication 1.

Des caractéristiques optionnelles de l'invention, complémentaires ou de substitution, sont énoncées ci-après.

La première surface de butée est ménagée sur la surface terminale de l'extrémité mâle, tandis que la seconde surface de butée est ménagée sur un épaulement réalisé sur l'extrémité femelle.

Les zones de butée extérieure et intérieure de la surface de butée creusée par la rainure appartiennent respectivement à un premier et à un second plans, distincts entre eux, chacun étant perpendiculaire à l'axe de révolution, la zone de butée intérieure étant proéminente par rapport à la zone de butée extérieure.

Le premier et le second plans sont distants d'une valeur ε comprise entre 0,025 mm et 0,075 mm.

Les zones de butée extérieure et intérieure de la surface de butée creusée par la rainure sont des surfaces convexes appartenant à une enveloppe sphérique de rayon R.

Le rayon R de la sphère est compris entre 500 mm et 2700 mm.

La zone de butée extérieure de la surface de butée creusée par la rainure se situe dans un plan incliné, par rapport à un plan perpendiculaire à l'axe de révolution, selon un angle α compris entre 0,5 et 2 degrés, et de sorte que la portion proximale à la rainure soit saillante par rapport à la portion distale à la rainure.

La zone de butée intérieure de la surface de butée creusée par la rainure se situe dans un plan incliné, par rapport à un plan perpendiculaire à l'axe de révolution, selon un angle β compris entre 0,5 et 2 degrés, et de sorte que la portion proximale à la rainure soit saillante par rapport à la portion distale à la rainure.

La section esup de la zone de butée extérieure est comprise entre 1,5 et 3 fois la section einf de la zone de butée intérieure.

Les première et seconde surfaces de butée sont chacune creusée par une rainure, la rainure creusant la première surface de butée délimitant de part et d'autre une zone de butée extérieure et une zone de butée intérieure, tandis que la rainure creusant la seconde surface de butée délimite de part et d'autre une zone de butée extérieure et une zone de butée intérieure.

Les extrémités mâle et femelle comportent chacune en leur surface terminale, une première surface de butée apte à venir en contact serrant lorsque le joint est à l'état vissé contre une seconde surface de butée elle-même ménagée sur un épaulement réalisé sur l'autre extrémité.

Le premier et le second composant tubulaire sont des composants tubulaires de forage.

Les caractéristiques et avantages de l'invention sont exposés plus en détail dans la description ci-après, avec référence aux dessins annexés.
La figure 1 est une vue schématique en coupe longitudinale d'un joint résultant de l'assemblage par vissage de deux composants tubulaires, et conforme à un mode de réalisation de l'invention.
La figure 2 est une vue schématique en coupe longitudinale d'un ensemble de deux composants tubulaires avant l'assemblage par vissage, et conforme à un mode de réalisation de l'invention.
La figure 3A est une vue schématique de la pression de contact dans un joint conforme à l'art antérieur.
La figure 3B est une vue schématique en coupe longitudinale d'un détail d'un joint conforme à l'art antérieur.
La figure 4A est une vue schématique de la pression de contact dans un joint conforme à un premier mode de réalisation de l'invention.
La figure 4B est une vue schématique en coupe longitudinale d'un détail d'un joint conforme au premier mode de réalisation de l'invention.
La figure 5A est une vue schématique de la pression de contact dans un joint conforme à un second mode de réalisation de l'invention.
La figure 5B est une vue schématique en coupe longitudinale d'un détail d'un joint conforme au second mode de réalisation de l'invention.
La figure 6A est une vue schématique de la pression de contact dans un joint conforme à un troisième mode de réalisation de l'invention.
La figure 6B est une vue schématique en coupe longitudinale d'un détail d'un joint conforme au troisième mode de réalisation de l'invention.
La figure 7A est une vue schématique de la pression de contact dans un joint décrit ici.
La figure 7B est une vue schématique en coupe longitudinale d'un détail d'un joint décrit ici.

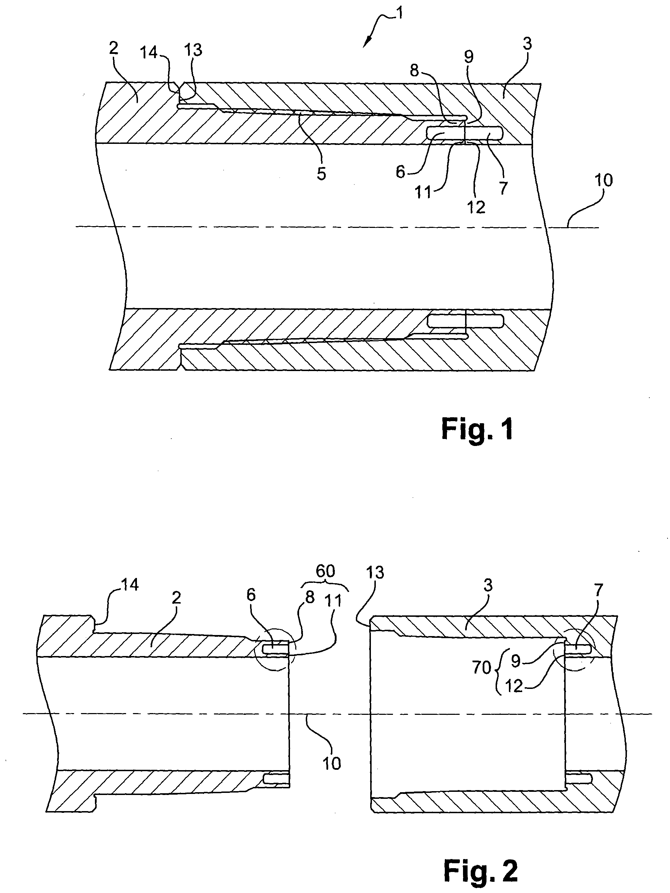

On a représenté sur la figure 1 un joint fileté 1 à l'état vissé d'axe de révolution 10, comprenant un premier composant tubulaire de même axe de révolution 10 et doté d'une extrémité mâle 2 et un second composant tubulaire de même axe de révolution 10 et doté d'une extrémité femelle 3, l'extrémité mâle et l'extrémité femelle étant vissées entre elles. Les deux extrémités 2 et 3 s'achèvent chacune par une surface terminale, respectivement 60 et 14, orientée sensiblement de manière radiale par rapport à l'axe 10 du joint fileté et sont respectivement dotées de zones filetées 5 qui coopèrent entre elles pour l'assemblage mutuel par vissage des deux composants. On entend par zones filetées, les portions de la surface circonférentielle d'un composant tubulaire présentant un filetage continu, c'est-à-dire sans interruption de l'hélice de filetage.

La figure 2 représente un ensemble pour la réalisation du joint 1 de la figure 1, les premier et second composants tubulaires étant à l'état dévissé. Les références sont identiques à celles de la figure 1.

Selon les figures 1 et 2, le joint 1 comporte une butée externe mettant en présence la surface terminale 14 de l'extrémité femelle 3 et un épaulement 13 ménagé sur l'extrémité mâle 2, ladite surface terminale et ledit épaulement étant amenés à venir en contact serrant lorsque le joint 1 est à l'état vissé.

Selon les figures 1 et 2, le joint 1 comporte aussi une butée interne mettant en présence une première surface de butée 60 ménagée sur la surface terminale de l'extrémité mâle 2 et une seconde surface de butée 70 ménagée sur un épaulement ménagé à l'intérieur de l'extrémité femelle 3, lesdites première et seconde surface de butée 60 et 70 étant amenées à venir en contact serrant lorsque le joint 1 est à l'état vissé.

Selon le mode de réalisation détaillé aux figures 1 et 2, la surface terminale de l'extrémité mâle 2 et l'épaulement ménagé à l'intérieur de l'extrémité femelle 3 comportent chacun un évidement respectivement référencé 6 et 7. Lesdits évidements 6 et 7 sont chacun une rainure de forme sensiblement annulaire. Ces rainures 6 et 7 permettent de diminuer la raideur radiale ainsi que la raideur axiale. L'Homme du Métier saura définir la rainure 6, notamment en termes de forme, de longueur et d'épaisseur, en fonction de la diminution de la raideur radiale souhaitée. De ce fait les risques de grippage seront limités et le contact entre les surfaces de butée reste assuré même lorsque le joint travaille en traction-compression. De même, L'Homme du Métier saura définir la rainure 7, notamment en termes de forme, de longueur et d'épaisseur, en fonction de la diminution de la raideur axiale souhaitée. De ce fait, la butée interne aura un comportement davantage élastique qui garantira le contact des surfaces de butée lorsque le joint travaille en traction/compression.

Comme il est décrit sur les figures 1 et 2, la rainure 6 pratiquée dans la surface terminale de l'extrémité mâle délimite ainsi une zone de butée extérieure 8 et une zone de butée intérieure 11, les dites zones de butée extérieure et intérieure définissant la première surface de butée 60 de la butée interne.

De même, comme il est décrit sur les figures 1 et 2, la rainure 7 pratiquée dans l'épaulement de l'extrémité femelle délimite ainsi une zone de butée extérieure 9 et une zone de butée intérieure 12, les dites zones de butée extérieure et intérieure définissant la seconde surface de butée 70 de la butée interne.

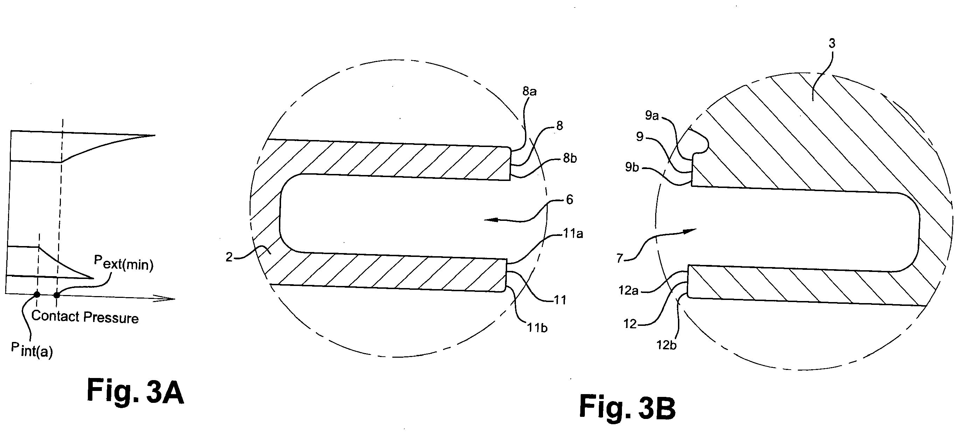

La figure 3B décrit un joint de l'art antérieur comportant selon des références identiques à celle des figures 1 et 2, soit une première et une seconde surfaces de butée creusées respectivement par les rainures 6 et 7 délimitant chacune ainsi une zone de butée extérieure 8, 9 et une zone de butée intérieure 11, 12. Les zones de butée 8, 11 de la première surface de butée 60 comportent respectivement une portion 8b et 11a, proximale de la rainure 6, et comportent respectivement une portion 8a et 11b, distale de la rainure 6. De même, les zones de butée 9, 12 de la seconde surface de butée 70 comportent respectivement une portion 9b et 12a, proximale de la rainure 7, et comportent respectivement une portion 9a et 12b, distale de la rainure 7.

La figure 3A décrit un diagramme de la répartition des pressions de contact pour un joint de l'art antérieur tel que décrit à la figure 3B, ledit joint étant à l'état vissé, et ce, au niveau des zones de butées extérieures 8 et 9 et au niveau des zones de butées intérieures 11 et 12. Les zones de butées extérieures 8 et 9 sont coplanaires entre elles. De même, les zones de butées intérieures 11 et 12 sont également coplanaires entre elles.

Il apparaît alors que la pression de contact Pint(a) qui s'exerce au niveau des portions 11a, 12a proximales aux rainures 6, 7, pour les zones de butée intérieure 11, 12, est plus petite que la valeur minimum de pression de contact Pext (min) qui s'exerce dans les zones de butée extérieures 8, 9 des première et seconde surfaces de butée 60 et 70. De ce fait, le contact est moins stable au niveau des zones de butées intérieures 11 et 12 qu'au niveau des zones de butées extérieures 8 et 9.

En revanche selon la caractéristique principale de l'invention, à l'état vissé, au moins l'une des zones de butée extérieure 9 et intérieure 12 de la seconde surface de butée 70 forme une proéminence axiale et les zones de butée sont agencées de manière à ce que la pression de contact Pint(a) de la zone de butée intérieure 12 s'exerçant dans le voisinage 12a de la rainure 7 soit supérieure ou égale à la valeur minimum de pression de contact Pext (min) s'exerçant dans la zone de butée extérieure 9. On entend par « proéminence axiale », le fait qu'au moins une des deux zones de butées, sinon les deux, fait ou font saillie. Elles ne sont pas dans un même plan. Cette proéminence se situe dans le voisinage de la rainure de manière à optimiser la pression de contact de la zone de butée intérieure. De cette façon, le contact est plus important au niveau des zones de butées intérieures 11 et 12 qu'au niveau des zones de butées extérieures 8 et 9. Les risques de fuite depuis l'intérieur des tubes vers l'extérieur sont de ce fait amoindris.

L'invention regroupe un certains nombre de variantes relatives à l'agencement des zones de butée extérieure 9 et intérieure 12 de la seconde surface de butée 70.

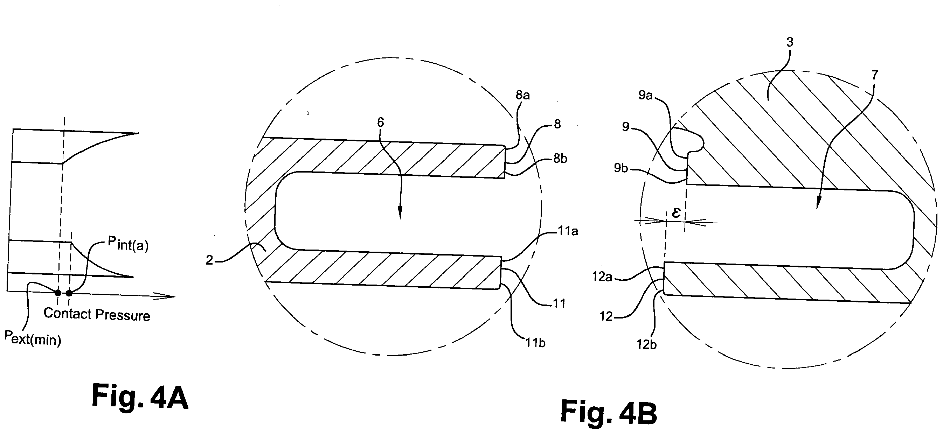

La figure 4B décrit un joint selon une première variante de l'invention avec des références identiques à celle des figures précédentes, soit une première et une seconde surfaces de butée creusées respectivement par les rainures 6 et 7 délimitant chacune ainsi une zone de butée extérieure 8, 9 et une zone de butée intérieure 11, 12. Les zones de butée 8, 11 de la première surface de butée 60 comportent respectivement une portion 8b et 11a, proximale de la rainure 6, et comportent respectivement une portion 8a et 11b, distale de la rainure 6. De même, les zones de butée 9, 12 de la seconde surface de butée 70 comportent respectivement une portion 9b et 12a, proximale de la rainure 7, et comportent respectivement une portion 9a et 12b, distale de la rainure 7.

Selon cette variante, les zones de butée extérieure 9 et intérieure 12 de la surface de butée 70 creusée par la rainure 7 appartiennent respectivement à un premier et à un second plans, distincts entre eux, chacun étant perpendiculaire à l'axe de révolution 10 et la zone de butée intérieure 12 étant proéminente par rapport à la zone de butée extérieure 9. Comme le montre la figure 4A, la pression de contact Pint(a) s'exerçant dans le voisinage 12a de la rainure 7 est supérieure à la valeur minimum de pression de contact Pext (min) s'exerçant dans la zone de butée extérieure 9.

Avantageusement, le premier et le second plans sont distants d'une valeur ε comprise entre 0,025 mm et 0,075 mm, de cette façon, la pression de contact Pint(a) s'exerçant dans le voisinage 12a de la rainure 7 est supérieure à la valeur minimum de pression de contact Pext (min) s'exerçant dans la zone de butée extérieure 9. De ce fait, ce mode de réalisation permet, pour des profondeurs de gorge de 10 mm à 25 mm, d'éviter un différentiel inversé au niveau des pressions de contact entre les surfaces 11 et 12 et les surfaces 8 et 9, qui s'élevait à 300 MPa pour un joint standard conforme à la figure 3.

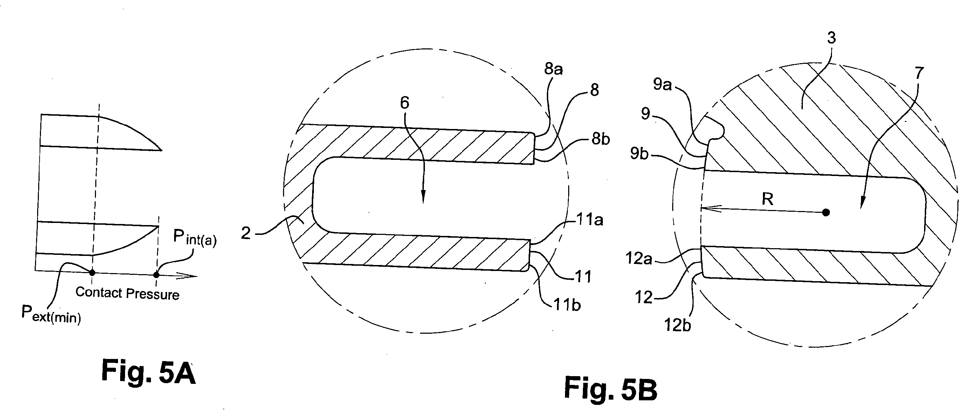

La figure 5B décrit un joint selon une seconde variante de l'invention avec des références identiques à celle des figures précédentes, soit une première et une seconde surfaces de butée creusées respectivement par les rainures 6 et 7 délimitant chacune ainsi une zone de butée extérieure 8, 9 et une zone de butée intérieure 11, 12. Les zones de butée 8, 11 de la première surface de butée 60 comportent respectivement une portion 8b et 11a, proximale de la rainure 6, et comportent respectivement une portion 8a et 11b, distale de la rainure 6. De même, les zones de butée 9, 12 de la seconde surface de butée 70 comportent respectivement une portion 9b et 12a, proximale de la rainure 7, et comportent respectivement une portion 9a et 12b, distale de la rainure 7.

Selon cette variante, les zones de butée extérieure 9 et intérieure 12 de la surface de butée 70 creusée par la rainure 7 sont des surfaces convexes appartenant à une enveloppe sphérique de rayon R. Comme le montre la figure 5A, la pression de contact Pint(a) s'exerçant dans le voisinage 12a de la rainure 7 est supérieure à la valeur minimum de pression de contact Pext (min) s'exerçant dans la zone de butée extérieure 9.

Avantageusement, le rayon R de la sphère est compris entre 500 mm et 2700 mm de cette façon, la pression de contact Pint(a) s'exerçant dans le voisinage 12a de la rainure 7 est supérieure à la valeur minimum de pression de contact Pext (min) s'exerçant dans la zone de butée extérieure 9. L'avantage de ce mode de réalisation est que la pression de contact est maximum au niveau des portions 8b, 9b, 11a et 12a. Ce mode de réalisation mettant en oeuvre un rayon permet de contrôler aisément la distribution de la pression contact et est facilement maîtrisable sur le plan de la fabrication. Le minimum de 500 mm pour R est choisi pour s'assurer que les surfaces 8a, 9a, 11b, et 12b restent en contact, même si il y a plastification des surfaces 8b, 9b, 11a, et 12a.

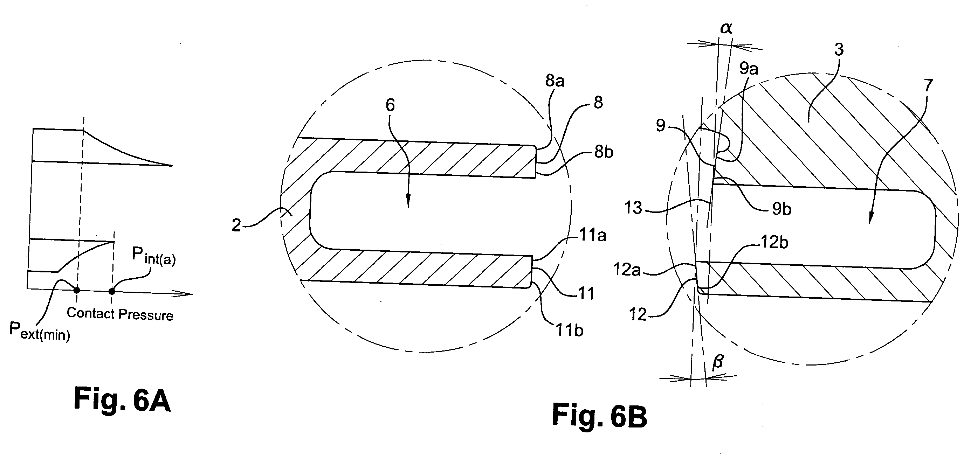

La figure 6B décrit un joint selon une seconde variante de l'invention avec des références identiques à celle des figures précédentes, soit une première et une seconde surfaces de butée creusées respectivement par les rainures 6 et 7 délimitant chacune ainsi une zone de butée extérieure 8, 9 et une zone de butée intérieure 11, 12. Les zones de butée 8, 11 de la première surface de butée 60 comportent respectivement une portion 8b et 11a, proximale de la rainure 6, et comportent respectivement une portion 8a et 11b, distale de la rainure 6. De même, les zones de butée 9, 12 de la seconde surface de butée 70 comportent respectivement une portion 9b et 12a, proximale de la rainure 7, et comportent respectivement une portion 9a et 12b, distale de la rainure 7.

Selon cette variante, la zone de butée extérieure 9 de la surface de butée 70 creusée par la rainure 7 se situe dans un plan incliné, par rapport à un plan perpendiculaire à l'axe de révolution 10, selon un angle α compris entre 0,5 et 2 degrés et de sorte que la portion proximale 9b à la rainure soit saillante par rapport à la portion distale 9a.

De même, la zone de butée intérieure 12 de la surface de butée 70 creusée par la rainure 7 se situe dans un plan incliné, par rapport à un plan perpendiculaire à l'axe de révolution 10, selon un angle β compris entre 0,5 et 2 degrés, et de sorte que la portion proximale 12a à la rainure soit saillante par rapport à la portion distale 12a.

Comme le montre la figure 6A, la pression de contact Pint(a) s'exerçant dans le voisinage 12a de la rainure 7 est supérieure à la valeur minimum de pression de contact Pext (min) s'exerçant dans la zone de butée extérieure 9. Il est important de noter que si les angles sont trop importants, les pressions contacts dans les portions 8b, 9b, 11a, et 12a seront trop élevées et il y a des risques de plastification des surfaces de butée ou bien des défauts d'étanchéité. En revanche, si les angles sont trop faible, l'usinage sera difficile à contrôler et l'effet escompté, à savoir l'augmentation des pressions de contact au niveau des portions 8b, 9b, 11a, 12a ne sera pas suffisant.

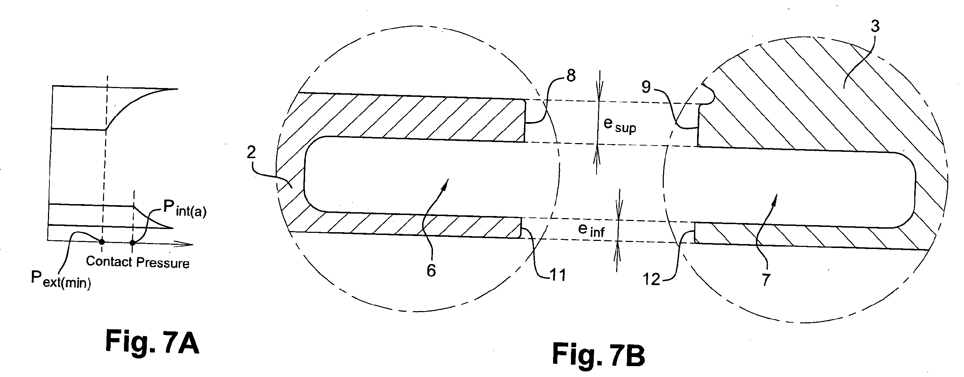

Avantageusement et comme décrit en figure 7B, dans le but de renforcer encore la pression de contact Pint(a) s'exerçant dans le voisinage 12a, la section esup de la zone de butée extérieure est comprise entre 1,5 et 3 fois la section einf de la zone de butée intérieure. Plus particulièrement, si la section esup est égale à 1,5 fois la section einf, les pressions de contact au niveau des portions 8b, 9b et des portions 11a, 12a seront égalisées. En revanche, si la section esup est égale à 3 fois la section einf, les pressions de contact au niveau des portions 8b, 9b seront 50% à 100% moins élevées qu'au niveau des portions 11a, 12a.

Comme le montre la figure 7A, la pression de contact Pint(a) s'exerçant dans le voisinage des portions 11a et 12a proximales aux rainures respectivement 7 et 6, est supérieure à la valeur minimum de pression de contact Pext (min) s'exerçant dans les zones de butée extérieures et respectivement 8 et 9.

Bien entendu, d'autres variantes non représentées sur les figures sont possibles.

Ainsi, la surface de butée 60 de l'extrémité mâle peut être un disque plein, sensiblement perpendiculaire à l'axe 10, tout comme elle peut être creusée par la rainure 6.

Il est aussi par exemple envisageable d'appliquer les variantes précédemment décrites à l'extrémité mâle. Dans ce cas, les zones de butée extérieure 8 et intérieure 11 de la surface de butée 60 creusée par la rainure 6 appartiendraient respectivement à un premier et à un second plans, distincts entre eux, chacun étant perpendiculaire à l'axe de révolution 10 et la zone de butée intérieure 11 étant proéminente par rapport à la zone de butée extérieure 8. Dans ce cas, la pression de contact Pint(a) s'exerçant dans le voisinage 11a de la rainure 6 serait supérieure à la valeur minimum de pression de contact Pext (min) s'exerçant dans la zone de butée extérieure 8.

De même, il est possible d'avoir comme autre variante la configuration selon laquelle, les zones de butée extérieure 8 et intérieure 11 de la surface de butée 60 creusée par la rainure 6 seraient des surfaces convexes appartenant à une enveloppe sphérique de rayon R.

De même, il est possible d'avoir comme autre variante la configuration selon laquelle, la zone de butée extérieure 8 de la surface de butée 60 creusée par la rainure 6 se situe dans un plan incliné, par rapport à un plan perpendiculaire à l'axe de révolution 10, selon un angle α compris entre 0,5 et 2 degrés, et de sorte que la portion proximale 8b à la rainure soit saillante par rapport à la portion distale 8a.

De même, la zone de butée intérieure 11 de la surface de butée 60 creusée par la rainure 6 se situe dans un plan incliné, par rapport à un plan perpendiculaire à l'axe de révolution 10, selon un angle β compris entre 0,5 et 2 degrés, et de sorte que la portion proximale 11a de la rainure soit saillante par rapport à la portion distale 11b.

Bien entendu, la surface de butée 70 de l'extrémité femelle en regard de la surface de butée mâle 60, peut être un disque plein, sensiblement perpendiculaire à l'axe 10, tout comme elle peut être creusée par la rainure 7.

Il est aussi envisageable d'incrémenter l'invention au niveau de la butée externe mettant en présence la surface terminale 14 de l'extrémité femelle 3 et l'épaulement 13 ménagé sur l'extrémité mâle 2. Dans ce cas, il est nécessaire de doter au moins l'une des deux surfaces de butées 13, 14, d'une rainure qui de cette manière définira respectivement une zone de butée extérieure et une zone de butée intérieure. Chacune des zones de butée extérieure et intérieure comportera une portion distale et une portion proximale par rapport à ladite rainure.

Avantageusement, l'invention s'applique tout particulièrement aux composants tubulaires de forage dans la mesure où les couples de serrage sur butée sont particulièrement importants.

## Revendications

1. Ensemble pour la réalisation d'un joint fileté (1) pour le forage ou l'exploitation des puits d'hydrocarbures, ledit joint comprenant un premier et un second composant tubulaire d'axe de révolution (10), chacun étant doté d'une extrémité respectivement mâle (2) et femelle (3), au moins l'une des extrémités mâle (2) ou femelle (3) s'achevant par une surface terminale comportant une première surface de butée (60) apte à venir en contact serrant lorsque le joint est à l'état vissé contre une seconde surface de butée (70) elle-même ménagée sur un épaulement réalisé sur l'autre extrémité, au moins l'une des première (60) et seconde (70) surfaces de butée étant creusée par une rainure (6,7) délimitant ainsi une zone de butée extérieure (8,9) et une zone de butée intérieure (11,12), **caractérisé en ce qu'**à l'état vissé, au moins l'une des zones de butée extérieure (8,9) et intérieure (11,12) forme une proéminence axiale, de manière à ce que la pression de contact Pint(a) de la zone de butée intérieure (11,12) s'exerçant dans le voisinage (12a) de la rainure (6,7) est supérieure ou égale à la valeur minimum de pression de contact Pext (min) s'exerçant dans la zone de butée extérieure (8,9), et **en ce que** les zones de butée extérieure (8,9) et intérieure (11,12) d'au moins l'une des première (60) et seconde (70) surfaces de butée creusée par la rainure (6,7) appartiennent respectivement à un premier et à un second plans, distincts entre eux.

2. Ensemble pour la réalisation d'un joint fileté (1) selon la revendication 1, **caractérisé en ce que** la première surface de butée (60) est ménagée sur la surface terminale de l'extrémité mâle (2), tandis que la seconde surface de butée (70) est ménagée sur un épaulement réalisé sur l'extrémité femelle (3).

3. Ensemble pour la réalisation d'un joint fileté (1) selon l'une quelconque des revendications précédentes, **caractérisé en ce que** les zones de butée extérieure (9) et intérieure (12) de la surface de butée (70) creusée par la rainure (7) appartiennent respectivement à un premier et à un second plans, distincts entre eux, chacun étant perpendiculaire à l'axe de révolution (10), la zone de butée intérieure (12) étant proéminente par rapport à la zone de butée extérieure (9).

4. Ensemble pour la réalisation d'un joint fileté (1) selon la revendication 3, **caractérisé en ce que** le premier et le second plans sont distants d'une valeur ε comprise entre 0,025 mm et 0,075 mm.

5. Ensemble pour la réalisation d'un joint fileté (1) selon l'une quelconque des revendications 1 ou 2, **caractérisé en ce que** les zones de butée extérieure (9) et intérieure (12) de la surface de butée (70) creusée par la rainure (7) sont des surfaces convexes appartenant à une enveloppe sphérique de rayon R.

6. Ensemble pour la réalisation d'un joint fileté (1) selon la revendication 5, **caractérisé en ce que** le rayon R de la sphère est compris entre 500 mm et 2700 mm.

7. Ensemble pour la réalisation d'un joint fileté (1) selon l'une quelconque des revendications 1 ou 2, **caractérisé en ce que** la zone de butée extérieure (9) de la surface de butée (70) creusée par la rainure (7) se situe dans un plan incliné, par rapport à un plan perpendiculaire à l'axe de révolution (10), selon un angle α compris entre 0,5 et 2 degrés, et de sorte que la portion proximale 9b à la rainure soit saillante par rapport à la portion distale 9a.

8. Ensemble pour la réalisation d'un joint fileté (1) selon la revendication 7, **caractérisé en ce que** la zone de butée intérieure (12) de la surface de butée (70) creusée par la rainure (7) se situe dans un plan incliné, par rapport à un plan perpendiculaire à l'axe de révolution (10), selon un angle β compris entre 0,5 et 2 degrés, et de sorte que la portion proximale 12a à la rainure soit saillante par rapport à la portion distale 12b.

9. Ensemble pour la réalisation d'un joint fileté (1) selon l'une quelconque des revendications précédentes, **caractérisé en ce que** la section esup de la zone de butée extérieure est comprise entre 1,5 et 3 fois la section einf de la zone de butée intérieure.

10. Ensemble pour la réalisation d'un joint fileté (1) selon l'une quelconque des revendications précédentes, **caractérisé en ce que** les première (60) et seconde (70) surfaces de butée sont chacune creusées par une rainure, la rainure (6) creusant la première surface de butée (60) délimitant de part et d'autre une zone de butée extérieure (8) et une zone de butée intérieure (11), tandis que la rainure (7) creusant la seconde surface de butée (70) délimite de part et d'autre une zone de butée extérieure (9) et une zone de butée intérieure (12).

11. Ensemble pour la réalisation d'un joint fileté (1) selon l'une quelconque des revendications précédentes, **caractérisé en ce que** les extrémités mâle (2) et femelle (3) comportent chacune en leur surface terminale, une première surface de butée (60, 14) apte à venir en contact serrant lorsque le joint est à l'état vissé contre une seconde surface de butée (70, 13) elle-même ménagée sur un épaulement réalisé sur l'autre extrémité.

12. Ensemble pour la réalisation d'un joint fileté (1) selon l'une quelconque des revendications précédentes, **caractérisé en ce que** le premier et le second composant tubulaire sont des composants tubulaire de forage.

## Patentansprüche

1. Baugruppe zur Herstellung einer Schraubverbindung (1) zum Bohren oder Betreiben von Kohlenwasserstoffbohrlöchern, wobei die Verbindung eine erste und eine zweite rohrförmige Drehachsenkomponente (10) jeweils mit einem Steckende (2) und einem Aufnahmeende (3) umfasst, wobei mindestens das Steckende (2) oder das Aufnahmeende (3) in einer Endfläche endet/enden, die eine erste Anlagefläche (60) aufweist, die in Anpresskontakt kommen kann, wenn die Verbindung im verschraubten Zustand gegen eine zweite Anlagefläche (70) ist, die wiederum an einer Schulter am anderen Ende ausgebildet ist, wobei mindestens die eine der ersten (60) und der zweiten (70) Anlagefläche, die durch eine Rille (6, 7) eingekerbt ist, die somit eine äußere Anlagezone (8, 9) und eine innere Anlagezone (11, 12) begrenzt, **dadurch gekennzeichnet, dass** im verschraubten Zustand mindestens die eine der äußeren (8, 9) und der internen (11, 12) Anlagezone einen axialen Vorsprung bildet/bilden, so dass der in der Nähe (12a) der Rille (6, 7) ausgeübte Kontaktdruck Pint(a) der inneren Anlagezone (11, 12) gleich oder größer als der in der äußeren Anlagezone (8, 9) ausgeübte Mindestkontaktdruckwert Pext (min) ist, und dadurch, dass die äußere (8, 9) und die innere (11, 12) Anlagezone von mindestens einer der der ersten (60) und der zweiten (70) Anlagefläche, die durch eine Rille (6, 7) eingekerbt ist, jeweils zu einer ersten und einer sich davon unterscheidenden zweiten Ebene gehören.

2. Baugruppe zur Herstellung einer Schraubverbindung (1) nach Anspruch 1, **dadurch gekennzeichnet, dass** die erste Anlagefläche (60) auf der Endfläche des Steckendes (2) vorgesehen ist, während die zweite Anlagefläche (70) auf einer am Aufnahmeende (3) vorgesehenen Schulter ausgebildet ist.

3. Baugruppe zur Herstellung einer Schraubverbindung (1) nach einem der vorherigen Ansprüche, **dadurch gekennzeichnet, dass** die äußere (9) und die innere (12) Anlagezone der Auftriebsfläche (70), die durch eine Rille (7) eingekerbt ist, jeweils zu einer ersten und einer sich davon unterscheidenden zweiten Ebene gehören, die jeweils lotrecht zur Drehachse (10) sind, wobei die innere Anlagezone (12) in Bezug auf die äußere Anlagezone (9) vorsteht.

4. Baugruppe zur Herstellung einer Schraubverbindung (1) nach Anspruch 3, **dadurch gekennzeichnet, dass** die erste und die zweite Ebene um einen Wert ε zwischen 0,025 mm und 0,075 mm voneinander beabstandet sind.

5. Baugruppe zur Herstellung einer Schraubverbindung (1) nach Anspruch 1 oder 2, **dadurch gekennzeichnet, dass** die äußere (9) und die innere (12) Anlagezone der Anlagefläche (70), die durch eine Rille (7) eingekerbt ist, konvexe Flächen sind, die zu einer kugelförmigen Hülle mit Radius R gehören.

6. Baugruppe zur Herstellung einer Schraubverbindung (1) nach Anspruch 5, **dadurch gekennzeichnet, dass** der Radius R der Kugel zwischen 500 mm und 2700 mm liegt.

7. Baugruppe zur Herstellung einer Schraubverbindung (1) nach Anspruch 1 oder 2, **dadurch gekennzeichnet, dass** die äußere Anlagezone (9) der Anlagefläche (70), die durch eine Rille (7) eingekerbt ist, in einer mit Bezug auf eine Ebene lotrecht zur Drehachse (10) nach einem Winkel α zwischen 0,5 und 2 Grad geneigten Ebene liegt, so dass der zur Rille proximale Abschnitt 9b in Bezug auf den distalen Teil 9a auskragt.

8. Baugruppe zur Herstellung einer Schraubverbindung (1) nach Anspruch 7, **dadurch gekennzeichnet, dass** die innere Anlagezone (12) der Anlagefläche (70), die durch die Rille (7) eingekerbt ist, in einer in Bezug auf eine Ebene lotrecht zur Drehachse (10) in einem Winkel β zwischen 0,5 und 2 Grad geneigten Ebene liegt, so dass der zur Rille proximale Abschnitt 12a in Bezug auf den distalen Abschnitt 12b auskragt.

9. Baugruppe zur Herstellung einer Schraubverbindung (1) nach einem der vorherigen Ansprüche, **dadurch gekennzeichnet, dass** der Abschnitt esup der äußeren Anlagezone das 1,5- bis 3fache des Abschnitts einf der inneren Anlagezone beträgt.

10. Baugruppe zur Herstellung einer Schraubverbindung (1) nach einem der vorherigen Ansprüche, **dadurch gekennzeichnet, dass** die erste (60) und die zweite (70) Anlagefläche jeweils durch eine Rille eingekerbt sind , wobei die Rille (6), die die erste Anlagefläche (60) einkerbt, die auf beiden Seiten eine äußere Anlagezone (8) und eine innere Anlagezone (11) begrenzt, während die Rille (7), die die zweite Anlagefläche (70) einkerbt, die auf beiden Seiten eine äußere Anlagezone (9) und eine innere Anlagezone (12) begrenzt.

11. Baugruppe zur Herstellung einer Schraubverbindung (1) nach einem der vorherigen Ansprüche, **dadurch gekennzeichnet, dass** das Steckende (2) und das Aufnahmeende (3) jeweils in ihrer Endfläche eine erste Anlagefläche (60, 14) aufweisen, die in Anpresskontakt kommen kann, wenn die Verbindung im verschraubten Zustand an einer zweiten Anlagefläche (70, 13) ist, die wiederum an einer Schulter am anderen Ende ausgebildet ist.

12. Baugruppe zur Herstellung einer Schraubverbindung (1) nach einem der vorherigen Ansprüche, **dadurch gekennzeichnet, dass** die erste und die zweite rohrförmige Komponente rohrförmige Bohrkomponenten sind.

## Claims

1. Assembly for producing a threaded joint (1) for drilling or exploitation of hydrocarbon wells, the joint comprising a first and a second tubular component having an axis of revolution (10), each being provided with a male end (2) and female end (3), respectively, at least one of the male ends (2) and female ends (3) terminating with a terminal surface which comprises a first stop surface (60) which is capable of moving into locking contact when the joint is in the state screwed against a second stop surface (70) which is itself provided on a shoulder which is produced on the other end, at least one of the first stop surface (60) and second stop surface (70) being recessed with a groove (6,7) which thus delimits an outer stop zone (8, 9) and an inner stop zone (11, 12), **characterised in that**, in the screwed state, at least one of the outer stop zones (8, 9) and inner stop zones (11, 12) forms an axial protrusion so that the contact pressure Pint(a) of the inner stop zone (11, 12) applied in the region (12a) of the groove (6, 7) is greater than or equal to the minimum contact pressure value Pext (min) applied in the outer stop zone (8, 9), and **in that** the outer stop zones (8, 9) and inner stop zones (11, 12) of at least one of the first stop surface (60) and second stop surface (70) recessed by the groove (6, 7) belong to a mutually different first and second plane, respectively.

2. Assembly for producing a threaded joint (1) according to claim 1, **characterised in that** the first stop surface (60) is provided on the terminal surface of the male end (2), whilst the second stop surface (70) is provided on a shoulder produced on the female end (3).

3. Assembly for producing a threaded joint (1) according to either of the preceding claims, **characterised in that** the outer stop zone (9) and inner stop zone (12) of the stop surface (70) recessed by the groove (7) belong to a mutually different first and second plane, respectively, each being perpendicular to the axis of revolution (10), the inner stop zone (12) protruding with respect to the external stop zone (9).

4. Assembly for producing a threaded joint (1) according to claim 3, **characterised in that** the first and the second planes are separated from each other by a value ε between 0.025 mm and 0.075 mm.

5. Assembly for producing a threaded joint (1) according to either claim 1 or claim 2, **characterised in that** the outer stop zone (9) and the inner stop zone (12) of the stop surface (70) recessed by the groove (7) are convex surfaces which belong to a spherical envelope having a radius R.

6. Assembly for producing a threaded joint (1) according to claim 5, **characterised in that** the radius R of the sphere is between 500 mm and 2700 mm.

7. Assembly for producing a threaded joint (1) according to either claim 1 or claim 2, **characterised in that** the external stop zone (9) of the stop surface (70) recessed by the groove (7) is located in an inclined plane relative to a plane perpendicular to the axis of revolution (10), in accordance with an angle α between 0.5 and 2 degrees, and so that the portion 9b proximal to the groove protrudes relative to the distal portion 9a.

8. Assembly for producing a threaded joint (1) according to claim 7, **characterised in that** the inner stop zone (12) of the stop surface (70) recessed by the groove (7) is located in an inclined plane relative to a plane perpendicular to the axis of revolution (10), in accordance with an angle β between 0.5 and 2 degrees, and so that the portion 12a proximal to the groove protrudes relative to the distal portion 12b.

9. Assembly for producing a threaded joint (1) according to any one of the preceding claims, **characterised in that** the cross-section esup of the outer stop zone is between 1.5 and 3 times the cross-section einf of the inner stop zone.

10. Assembly for producing a threaded joint (1) according to any one of the preceding claims, **characterised in that** the first stop surface (60) and second stop surface (70) are each recessed by a groove, the groove (6) recessing the first stop surface (60) which delimits at one side and the other an outer stop zone (8) and an inner stop zone (11), whilst the groove (7) which recesses the second stop surface (70) delimits at one side and the other an outer stop zone (9) and an inner stop zone (12).

11. Assembly for producing a threaded joint (1) according to any one of the preceding claims, **characterised in that** the male end (2) and female end (3) each comprise at their terminal surface a first stop surface (60, 14) which is capable of moving into locking contact when the joint is in the state screwed against a second stop surface (70, 13) which is itself provided on a shoulder produced on the other end.

12. Assembly for producing a threaded joint (1) according to any one of the preceding claims, **characterised in that** the first and the second tubular component are tubular drilling components.
